# EUROPÄISCHE PATENTSCHRIFT

(11) **EP 1 325 802 B1**
(45) Veröffentlichungstag und Bekanntmachung des Hinweises auf die Patenterteilung: **23.11.2005**
(21) Anmeldenummer: 02028979.9
(22) Anmeldetag: 27.12.2002
(51) Int. Cl.: B29C 31/08, B29C 43/34

(54) **Verfahren und Anlage zum Einbringen und Ablegen eines Plastifikats in die Matrize einer Formpresse**
Method and device for inserting and depositing a plastic strand into a mold of a forming press
Procédé et dispositif pour insérer et déposer un cordon de matière plastique dans une matrice de presse de formage

(30) Priorität: 25.12.2001 DE 10163520
(43) Veröffentlichungstag der Anmeldung: 09.07.2003
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- EP-A- 0 313 155
- EP-A- 0 588 361
- US-A- 4 436 685
- US-A- 4 576 560
- US-A- 5 401 154

## Beschreibung

Die Erfindung bezieht sich auf ein Verfahren zum Einbringen und Ablegen eines Plastifikats in die Matrize einer Formpresse gemäss dem Oberbegriff des Anspruches 1 und eine Anlage zur Durchführung des Verfahrens gemäss dem Oberbegriff des Anspruches 6.

Bekannt ist, dass bei dem Plastifizier-Pressverfahren Plastifikate mittels eines Plastifizierextruders zyklisch oder kontinuierlich hergestellt werden. Bei den durch die Industrie geforderten hohen Plastifizierleistungen werden vermehrtauch bei Stäbchengranulaten - der kontinuierliche Plastifizierprozess genutzt, damit die Extruder nicht zu gross ausgeführt werden müssen.

Bei dem Lang-Faserverstärkten-Thermoplast Direktverfahren (LFT-Direktverfahren) nach DE 198.36 787 A1, von dem die Erfindung als Stand der Technik ausgeht, wird meist von einem kontinuierlich erzeugten Plastifikatstrang aus gearbeitet. Das sogenannte Strangablegeverfahren, bei dem der Extruder / Plastifizierer über die offene Kavität fährt, während dem Plastifikatausstoss zurückfährt und dabei das Plastifikat in die Kavität legt, konnte sich in der Praxis aus verschiedenen Gründen für die Langfaserverstärkten Thermoplasten (LFT) nicht durchsetzen. Eine solche Pressenanlage ist bekannt aus DE 197 34 473 A1.

Um kurze Zykluszeiten zu erreichen, werden deshalb die Plastifikate mit Nadelgreifern und schnellen Robotergreifern (bis zu sechs Bewegungsachsen) vom Plastifikat-Abzugsband aufgenommen und in die offene Kavität eingelegt. Bei den neuen komplexeren Forderungen der Industrie, dass zum Beispiel mehrere Plastifikatstücke zu einem Bild zusammengelegt werden und dann noch für zwei Pressteile gleichzeitig die Plastifikate in die offene Kavität eingelegt werden sollen in Verbindung mit immer kürzeren Zykluszeiten (25 Sekunden und darunter), gibt es bei der Aufnahme der Einzelplastifikate von dem Plastifikat-Abzugsband erhebliche Probleme. Neben der trägen Masse des Plastifikats und der daran gebundenen möglichen Beschleunigungskräfte werden die Greif- und Roboterarme unnötig aufwendig und schwer, so dass die Kosten für das verfahrenstechnische Erreichen der kurzen Zykluszeiten nicht mehr in Relation zum Kostenaufwand stehen oder erst gar nicht möglich ist. Auch in weiterer Patentliteratur wie US 4 436 685 A, EP 0 313 155 A, EP 0 588 361 A, US 5 401 154 A und US 4 576 560 A sind Anlagen zur Befüllung von offenen Kavitäten von Kunststoffpressen bekannt geworden, die versuchen möglichst schnell und einfach die richtige Menge an Plastifikat zur Verpressung bereitzustellen, aber die dennoch nicht mehr in der Lage sind die neuen oben genannten Forderungen der Industrie zu erfüllen.

Die Forderung mehrere Plastifikatstücke in einem entsprechenden Bild in die Kavität einzulegen ist damit begründet, dass die Faserorientierung und das Füllverhalten günstig beeinflusst wird und damit verbesserte Pressteile entstehen. Es werden auch Formgeometrien gefordert, welche ein grossflächiges Auslegen mit Plastifikaten erfordert, damit diese Kavitäten mit akzeptabler Presskraft noch ausgefüllt und verpresst werden können.

Der Erfindung liegt die Aufgabe zugrunde, ein Verfahren anzugeben, mit dem die Handhabungs- und die Transportgeräte für das Plastifikat vom Plastifizierextruder in die offene Form der Formpresse nicht unverhältnismässig gross wird und mit dem kurze Presszyklen bei der Mehrplastifikattechnologie machbar sind und eine Anlage zu schaffen, mit der das Verfahren durchzuführen ist.

Die Lösung der gestellten Aufgabe für das Verfahren ist durch das Auflegen der Plastifikatstücke gleicher oder unterschiedlicher Länge in programmierter Reihenfolge und Abständen auf mehrere parallel zueinander und umlaufend sowie querverschiebbar zueinander geführten Vorlegebändern, das Vorpositionieren der Plastifikatstücke neben- und hintereinander sowie ggf. übereinander zu einem Vorgelege auf dem mit verschiedenen Geschwindigkeiten angetriebenen Vorlegebändern und das Aufnehmen, Überführen und Einbringen des Vorgeleges in die Matrize der Formpresse mittels einem Robotergreifer möglich.

Die Lösung der Aufgabe für die Anlage besteht darin, dass nach der Trennvorrichtung die Überführungsvorrichtung die Plastifikatstücke gleicher oder verschiedener Länge nach gegebenem Programm auf mindestens zwei einzelnen angetriebenen Vorlegebändern mit vorgegebenem Abstand auflegt, wobei die Vorlegebänder Zusammenführen eines Vorgeleges quer verschiebbar zueinander angeordnet sind und ein Robotergreifer zum Aufnehmen, Überführen und Ablegen des Vorgeleges in der Formpresse vorgesehen sowie angeordnet ist.

Von Vorteil ist dabei, dass der Plastifikatabzug nach dem Schneiden der Plastifikatstücke von einer Spur in mehrere Vorlegebänder (-spuren) erweitert wird, diese Vorlegebänder (-spuren) jeweils einzeln angetrieben und durch Querschieben nach dem Schnitt des gerade fertigen und aufgenommenen Plastifikates von der einen Spur zur nächsten aktuellen Aufnahmespur gebracht werden. Während der Zeit in der die aktuelle Aufnahmespur das oder die Plastifikate aufnimmt, können die Plastifikate auf den anderen Vorlegebändern (-spuren) bereits vorpositioniert werden. Dies ergibt einen weiteren Vorteil, dass die Plastifikatstücke nicht nur hintereinander, sondern auch nebeneinander positioniert werden können. Damit kann der Robotgreifer einfacher und leichter ausgeführt sein, so dass für nahezu alle Vorlegebilder von Mehrfach-Plastifikaten die Plastifikatstärke gleichzeitig und nicht hintereinander aufgenommen werden müssen. Dies ermöglicht damit die kurzen Zykluszeiten der Mehrfach-Plastifikat-Technologie. Bei doppelter Anzahl von Vorlegebändern kann der Robotgreifer die Plastifikatstücke auch im Stillstand greifen.

Weitere Merkmale der Erfindung bestehen darin, dass
- das Plastifikatabzugssystem nach der Trennvorrichtung des endlosen Plastifikatstranges mit mindestens zwei einzelnen angetriebenen Vorlegebänder ausgerüstet ist, die quer verschiebbar sind,
- die Vorlegespuren mit einem weitgehend am Bandende angeordneten Drehpunkt auf der Trennseite quer verschiebbar (drehbar) sind,
- die Vorlegebänder beheizt werden und
- die Vorlegebänder von unten gegen Wärmeabstrahlung isoliert sind.

Weitere vorteilhafte Massnahmen und Ausgestaltungen des Gegenstandes der Erfindung gehen aus den Unteransprüchen und der folgenden Beschreibung mit der Zeichnung hervor.

Es zeigen:
- Figur 1: die Anlage zur Durchführung des Verfahrens gemäss der Erfindung in schematischer Darstellung in Seitenansicht,
- Figur 2: zwei Vorlegebänder nebeneinander beim Abnehmen der Plastifikatstücke im Grundriss,
- Figur 3: die Vorlegebänder nach Figur 2 nachdem Querverschieben und Drehen zweier Plastifikatstücke,
- Figur 4: die Vorlegebänder mit den Plastifikatstücken nach Figur 3 zu einem Rechteck-Rahmen zusammengeschoben,
- Figur 5: drei Vorlegebänder nebeneinander mit vier Plastifikatstücken im Grundriss,
- Figur 6: die drei Vorlegebänder nach Figur 5 nach dem Querverschieben und Drehen der Plastifikatstücke zu einem Rechteck-Rahmen und
- Figur 7: in Draufsicht eine Anordnung von vier Vorlegebändern mit je einem Einzelantrieb.

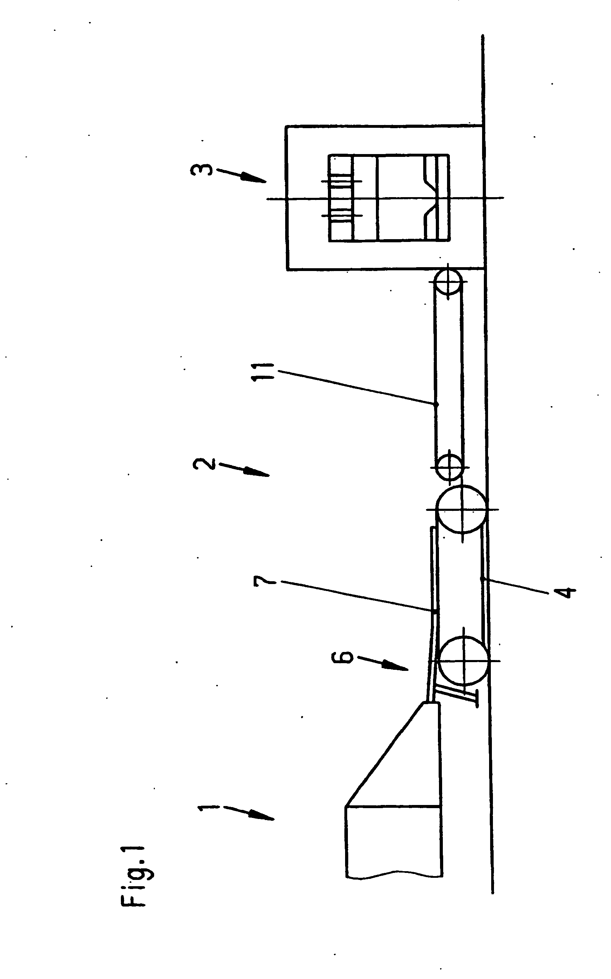

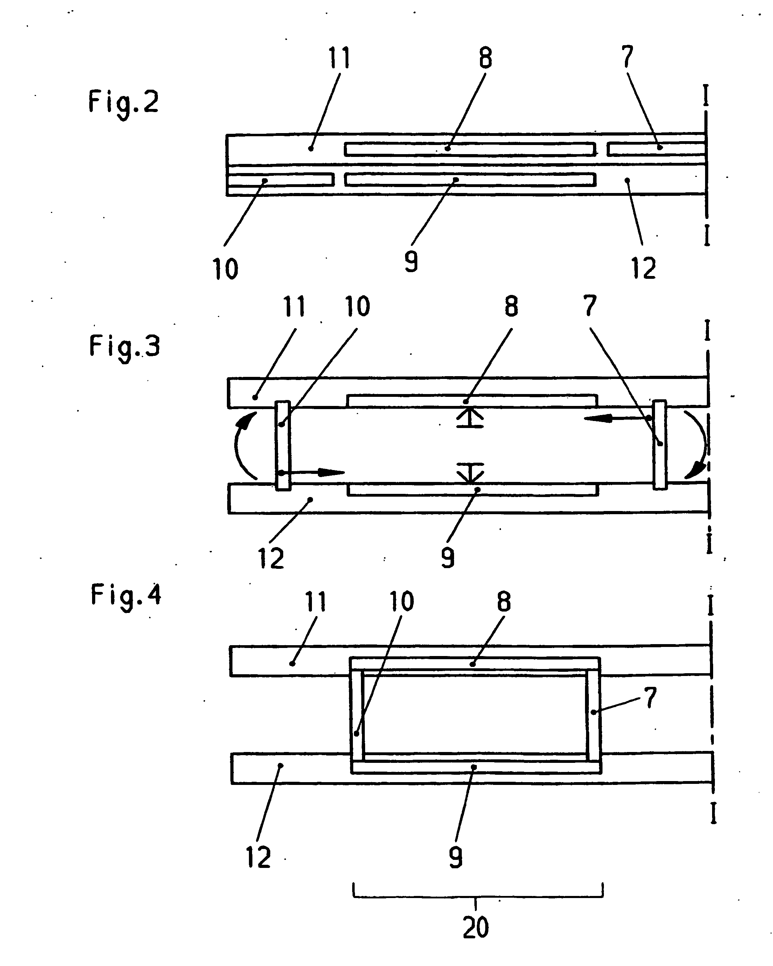

Die Figur 1 zeigt die Anlage zur Durchführung des Verfahrens gemäss der Erfindung mit dem Plastifizierextruder 1, der Überführungsvorrichtung 2 bestehend aus der Trennvorrichtung 6, dem Abzugsband mit Plastifikatstück 7, einem Vorlegeband 11 und der Formpresse 3. Der Überführungs-, Bewegungs- und Zusammenlegeablauf für die Plastifikatstücke 7, 8, 9 und 10 zu einem Rechteck-Rahmen ist in den Figuren 2 bis 6 beispielhaft veranschaulicht. Dafür zeigen die Figuren 2 bis 4 die Möglichkeit auf wie zwei Vorlegebänder 11 und 12 durch nebeneinanderfahren und querverfahren die Plastifikatstücke 8 und 9 und drehen sowie Verschieben der Plastifikatstücke 7 und 10 ein Rechteck-Rahmen als Vorgelege 20 zusammengestellt wird. Wie das Drehen und Schieben der Plastifikatstücke 7 und 10 erfolgt ist nicht dargestellt. Dafür sind mehrere kinematische Eingriffe, Handhabungswerkzeuge und/oder geeignete Vorrichtungen denkbar, die in der Industrie für derartige Abläufe gebräuchlich sind.

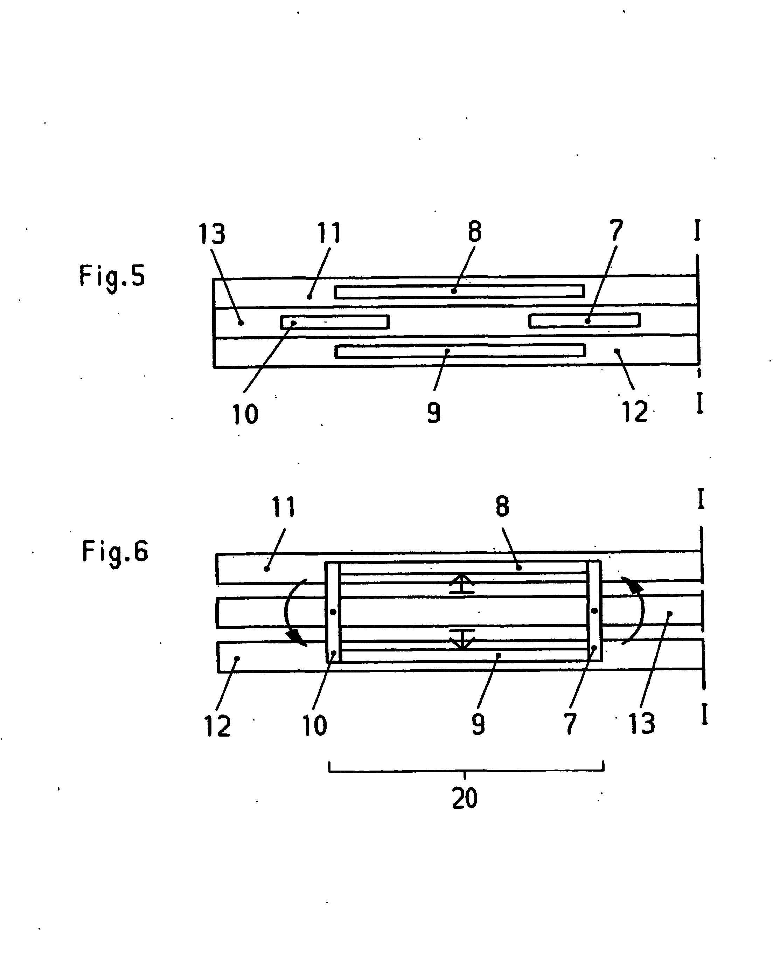

Mit den Figuren 5 und 6 ist das Zusammenführen der Plastifikatstücke 7, 8, 9 und 10 zu einem Vorgelege 20 mittels dreier Vorlegebänder 11, 12 und 13 dargestellt, wobei die Bewegungsabläufe ähnlich der vorbeschriebenen durchführbar sind.

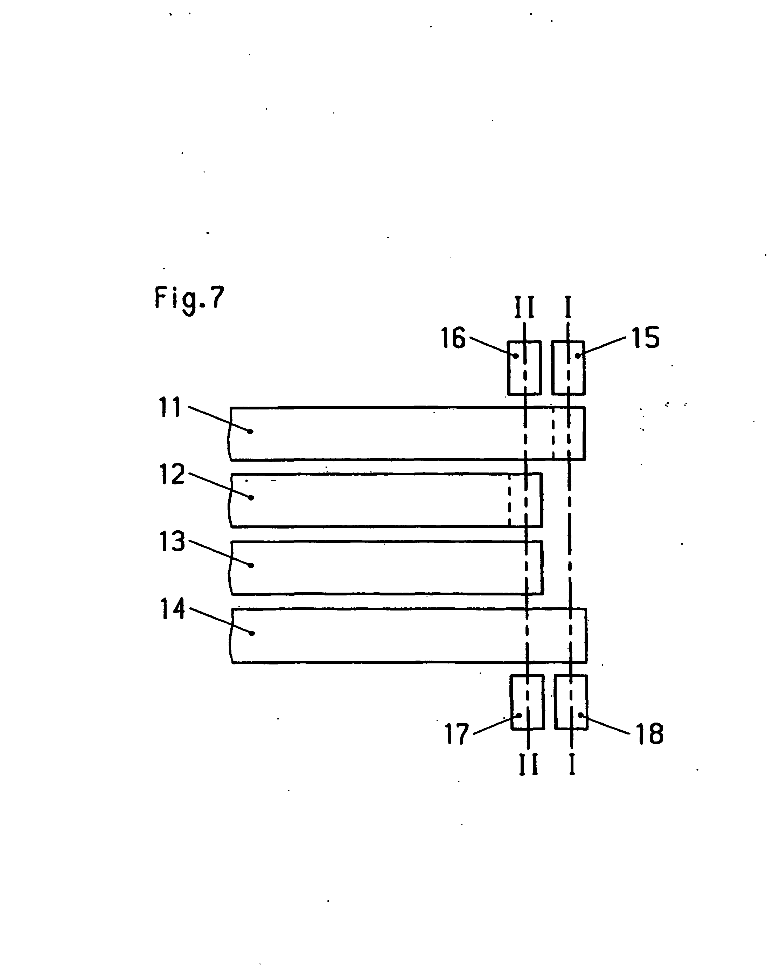

Die Figur 7 zeigt eine Anordnung zum Zusammenführen eines Vorgeleges 20 mit vier Vorlegebändern 11, 12, 13 und 14 und den Bezugslinien I-I, II-II für die Bandantriebe 15, 16, 17 und 18.

### Bezugszeichenliste: DP 1274 EP

- 1.: Plastifizierextruder
- 2.: Überführungsvorrichtung
- 3.: Formpresse
- 4.: Abzugsband
- 5.: Plastifikatstrang
- 6.: Trennvorrichtung
- 7.: Plastifikatstück
- 8.: Plastifikatstück
- 9.: Plastifikatstück
- 10.: Plastifikatstück
- 11.: Vorlegeband
- 12.: Vorlegeband
- 13.: Vorlegeband
- 14.: Vorlegeband
- 15.: Bandantrieb für Vorlegeband 11
- 16.: Bandantrieb für Vorlegeband 12
- 17.: Bandantrieb für Vorlegeband 13
- 18.: Bandantrieb für Vorlegeband 14
- 19. 20.: Vorgelege

- I-I: Bezugslinie
- II-II: Bezugslinie

## Patentansprüche

1. Verfahren zum Einbringen und Ablegen eines Plastifikats in die Matrize oder untere Formhälfte einer Formpresse (3) zum Herstellen von Pressteilen aus Kunststoff oder faserverstärktem Kunststoff durch Aushärten und Verpressen des Plastifikats in der heiz- und kühlbaren Form der Formpresse (3), Auftrennen des als Plastifikatstrang (5) aus einem Extruder (1) austretenden Plastifikats in Plastifikatstücke (7, 8, 9 oder 10), **gekennzeichnet durch**
das Auflegen der Plastifikatstücke (7, 8, 9 oder 10) gleicher oder unterschiedlicher Länge in programmierter Reihenfolge und Abständen auf mehrere parallel zueinander und umlaufend sowie querverschiebbar zueinander geführten Vorlegebändern (11, 12, 13, 14), das Vorpositionieren der Plastifikatstücke (7, 8, 9 oder 10) neben- und hintereinander sowie ggf. übereinander zu einem Vorgelege (20) auf den mit verschiedenen Geschwindigkeiten angetriebenen Vorlegebändern (11, 12, 13, 14) und
das Aufnehmen, Überführen und Einbringen des Vorgeleges (20) in die Matrize der Formpresse (3) mittels einem Robotergreifer.

2. Verfahren nach Anspruch1, **dadurch gekennzeichnet, dass** die Plastifikatstücke (7, 8, 9 oder 10) durch Querverschieben, Drehen und/oder Anheben der Vorlegebänder (11, 12, 13, 14) in die vorgegebene Form des gewünschten Vorgeleges (20) überführt werden.

3. Verfahren nach den Ansprüchen 1 und 2, **dadurch gekennzeichnet, dass** zum Zusammenführen der Plastifikatstücke (7, 8, 9 oder 10) zu einem Vorgelege (20) die Vorlegebänder (11, 12, 13, 14) durch je einen eigenen Antrieb (15, 16, 17, 18) mit gleicher oder ungleicher Geschwindigkeit angetrieben werden.

4. Verfahren nach den Ansprüchen 1 bis 3, **dadurch gekennzeichnet, dass** mehrere Vorgelege (20) zusammengestellt und mit mehreren Robotergreifern in entsprechend viele Matrizen der Formpresse (3) eingelegt werden.

5. Verfahren nach den Ansprüchen 1 bis 4, **dadurch gekennzeichnet, dass** die Vorlegebänder (11, 12, 13, 14) beheizt und gegen Wärmeabstrahlung nach unten isoliert sind.

6. Anlage zum Herstellen von Pressteilen aus Kunststoff oder faserverstärkten Kunststoffen, bestehend aus einem Extruder (1), einer Trennvorrichtung (6) für den Plastifikatstrang (5) und einer Überführungsvorrichtung (2) der Plastifikatstücke (7, 8, 9 oder 10) zur Formpresse (3) zur Durchführung des Verfahrens nach den Ansprüchen 1 bis 5, **dadurch gekennzeichnet, dass** nach der Trennvorrichtung (6) die Überführungsvorrichtung (2) die Plastifikatstücke (7, 8, 9, 10) gleicher oder verschiedener Länge nach gegebenem Programm auf mindestens zwei einzelnen angetriebenen Vorlegebändern (11, 12, 13, 14) mit vorgegebenem Abstand auflegt, wobei die Vorlegebänder (11, 12, 13, 14) zum Zusammenführen eines Vorgeleges (20) quer verschiebbar zueinander angeordnet sind und ein Robotergreifer zum Aufnehmen, Überführen und Ablegen des Vorgeleges (20) in der Formpresse (3) vorgesehen sowie angeordnet ist.

## Claims

1. A method for introducing and depositing a molding compound into the female mold or lower mold half of a molding press (3) for producing molded parts from plastic or fiber-reinforced plastic by curing and pressing the molding compound in the heatable and coolable mold of the molding press (3), severing the molding compound emerging as a strand (5) of molding compound from an extruder (1) into pieces (7, 8, 9, or 10) of molding compound, **characterized by** placing the pieces (7, 8, 9, or 10) of molding compound of similar or different length in a programmed sequence and distances on several feeder belts (11, 12, 13, 14) which are guided parallel with respect to each other, in a revolving manner and transversally displaceable with respect to each other, the prepositioning of the pieces (7, 8, 9 or 10) of the molding compound next to one another and successively behind one another and optionally above one another into a feed (20) on the feeder belts (11, 12, 13, 14) driven at different speeds, the receiving, transferring and introducing of the feed (20) into the female mold (3) by means of a robotic gripper.

2. A method according to claim 1, **characterized in that** the pieces (7, 8, 9 or 10) of molding compound are transferred to the predetermined shape of the feed (20) by transversal displacement, turning and/or lifting of the feeder belts (11, 12, 13, 14).

3. A method according to claims 1 and 2, **characterized in that** the feeder belts (11, 12, 13, 14) are driven by a separate drive (15,16,17,18) each with the same or different speed for joining the pieces (7, 8, 9 or 10) of molding compound into a feed (20).

4. A method according to claims 1 to 3, **characterized in that** several feeds (20) are composed and are placed with several robotic grippers into a respective number of female molds of the molding press (3).

5. A method according to the claims 1 to 4, **characterized in that** the feeder belts (11, 12, 13, 14) are heated and are insulated against downward thermal radiation.

6. An installation for producing molded parts made of plastic or fiber-reinforced plastic materials, consisting of an extruder (1), a severing apparatus (6) for the strand (5) of molding compound and a transfer apparatus (2) of the pieces (7, 8, 9 or 10) of the molding compounds to the molding press (3) for performing the method according to the claims 1 to 5, **characterized in that** after the severing apparatus (6) the transfer apparatus (2) places the pieces (7, 8, 9 or 10) of molding compound of the same or different length according to a given program onto at least two individually driven feeder belts (11, 12, 13, 14) with a predetermined distance, with the feeder belts (11, 12, 13, 14) being transversally displaceable with respect to one another for joining a feed (20) and a robotic gripper is provided and arranged for receiving, transferring and depositing the supply unit (20) into the molding press (3).

## Revendications

1. Procédé pour l'introduction et le dépôt d'une matière plastifiée dans la matrice ou le demi-moule inférieur d'une presse de moulage (3) pour la fabrication de pièces pressées en plastique ou en plastique armé de fibres par durcissement et pressage de la matière plastifiée dans le moule pouvant être chauffé et refroidi de la presse de moulage (3), découpage de la matière plastifiée sortant d'une extrudeuse (1) sous la forme d'une coulée de matière plastifiée (5) en morceaux de matière plastifiée (7, 8, 9 ou 10), **caractérisé en ce qu'**il comporte :
le dépôt des morceaux de matière plastifiée (7, 8, 9 ou 10) de longueur égale ou différente, dans un ordre programmé et avec des espacements programmés, sur plusieurs bandes de préparation (11, 12, 13, 14) parallèles et guidées en rotation et en translation transversale les unes par rapport aux autres,
le positionnement préalable des morceaux de matière plastifiée (7, 8, 9 ou 10) à côté ou à la suite les uns des autres et éventuellement les uns au-dessus des autres pour former un assemblage préparé (20) sur les bandes de préparation (11, 12, 13, 14) entraînées à différentes vitesses, et
la récupération, le transfert et l'introduction de l'assemblage préparé (20) dans la matrice de la presse de moulage (3) au moyen d'une pince de robot.

2. Procédé selon la revendication 1, **caractérisé en ce que** les morceaux de matière plastifiée (7, 8, 9 ou 10) sont transférés par translation transversale, rotation et/ou levage des bandes de préparation (11, 12, 13, 14) pour obtenir la forme prédéterminée de l'assemblage préparé (20) souhaité.

3. Procédé selon les revendications 1 et 2, **caractérisé en ce que** pour réunir les morceaux de matière plastifiée (7, 8, 9 ou 10) en un assemblage préparé (20), les bandes de préparation (11, 12, 13, 14) sont entraînées chacune par un entraînement propre (15, 16, 17, 18) à une vitesse égale ou différente.

4. Procédé selon les revendications 1 à 3, **caractérisé en ce que** plusieurs assemblages préparés (20) sont réunis et déposés par plusieurs pinces de robot dans un nombre correspondant de matrices de la presse de moulage (3).

5. Procédé selon les revendications 1 à 4, **caractérisé en ce que** les bandes de préparation (11, 12, 13, 14) sont chauffées et isolées en dessous pour empêcher le rayonnement de chaleur.

6. Installation pour la fabrication de pièces pressées en plastique ou en plastiques armés de fibres, composée d'une extrudeuse (1), d'un dispositif de découpage (6) pour la coulée de matière plastifiée (5) et d'un dispositif de transfert (2) des morceaux de matière plastifiée (7, 8, 9 ou 10) vers la presse de moulage (3) pour la mise en oeuvre du procédé selon les revendications 1 à 5, **caractérisée en ce qu'**après le dispositif de découpage (6), le dispositif de transfert (2) dépose les morceaux de matière plastifiée (7, 8, 9 ou 10) de longueur égale ou différente, selon le programme prédéterminé, sur au moins deux bandes de préparation (11, 12, 13, 14) entraînées séparément avec un espacement prédéterminé, les bandes de préparation (11, 12, 13, 14) étant disposées de manière mobile transversalement les unes par rapport aux autres pour assembler un assemblage préparé (20) et un bras de robot étant prévu et disposé pour récupérer l'assemblage préparé (20), le transférer et le déposer dans la presse de moulage (3).
